Europäisches Patentamt

European Patent Office

Office européen des brevets

(19)

(11) Veröffentlichungsnummer: **0 258 779**
B1

(12) **EUROPÄISCHE PATENTSCHRIFT**

(45) Veröffentlichungstag der Patentschrift:
31.10.90

(21) Anmeldenummer: 87112269.3

(22) Anmeldetag: 25.08.87

(51) Int. Cl.⁵: **E06B 3/80**, B65G 69/00

(54) **Verformbare Dichtung des Spaltes zwischen dem Rand einer Gebäudeöffnung und dem Heck eines an diese herangefahrenen Fahrzeuges.**

(30) Priorität: 30.08.86 DE 3629643

(43) Veröffentlichungstag der Anmeldung:
09.03.88 Patentblatt 88/10

(45) Bekanntmachung des Hinweises auf die Patenterteilung:
31.10.90 Patentblatt 90/44

(84) Benannte Vertragsstaaten:
AT BE CH DE ES FR GB GR IT LI LU NL SE

(56) Entgegenhaltungen:
DE-C- 3 527 636
FR-A- 2 510 651

(73) Patentinhaber: Alten, Kurt, Ringstrasse 14,
D-3015 Wennigsen(DE)

(72) Erfinder: Alten, Kurt, Ringstrasse 14,
D-3015 Wennigsen(DE)

(74) Vertreter: Depmeyer, Lothar, Auf der Höchte 30,
D-3008 Garbsen 1(DE)

## Beschreibung

Die Erfindung geht aus von einer verformbaren Dichtung gemäss dem Oberbegriff des 1. Patentanspruchs

Es wurde oft beobachtet, dass bei den bekannten Dichtungen (siehe z.B. FR-A 2 510 651) Faltenbildungen des oberen Schürzenabschnittes nicht vermieden werden können. Diese Faltenbildungen können durch Verformungen des Steges, aber auch durch unerwünschte Verformungen eines Schürzenabschnittes bedingt sein. Diese Faltenbildungen beeinträchtigen nicht nur die Abdichtwirkungen, vielmehr können auch auf diesen Abschnitten befindliche Zeichen und Beschriftungen verzerrt und unleserlich werden.

Der Erfindung liegt die Aufgabe zugrunde, die bekannten, eingangs erwähnten Dichtungen so zu verbessern, dass Faltenbildungen oder ähnliche unerwünschte Verformungen des sich quer erstreckenden Schürzenabschnittes zumindest weitgehend vermieden werden.

Diese Aufgabe wird erfindungsgemäss durch ein verstellbares Zugglied gelöst, das an seinen Enden mit den seitlichen Schenkeln verbunden ist. Dabei ist dieses Zugglied mit Vorteil paralled zu dem Steg angeordnet und zweckmässigerweise so befestigt, dass die Enden des Zuggliedes einige Zentimeter - beispielsweise 5 - 8 cm - unterhalb des Steges mit den Schenkeln verbunden sind.

Da das Zugglied mit seinen Enden mit den seitlich angeordneten Schenkeln verbunden ist und diese starr mit dem Steg in Verbindung stehen, bewirkt ein Zusammenziehen der beiden Schenkel ein Moment, das zu einer Durchbiegung des Steges nach oben führt, ohne dass zusätzlich Druckstäbe erforderlich sind. Zugleich werden aber auch die beiden seitlichen Schenkel zur Mitte der Dichtung bzw. zur Mitte der Gebäudeöffnung gezogen, wodurch die Schenkel daran gehindert sind, seitlich nach aussen auszuwandern, was durch die Belastung und die Verformung der seitlichen Schürzenabschnitte eintreten kann. Demgemäss erfüllt das Zugglied eine Doppelfunktion. Ohne Druckstäbe ist eine Durchbiegung erreichbar, während zusätzlich die Schenkel vor einer unerwünschten Ausweichbewegung zur Seite hin bewahrt bleiben.

In der Zeichnung ist ein Ausführungsbeispiel der Erfindung dargestellt. Es zeigen :

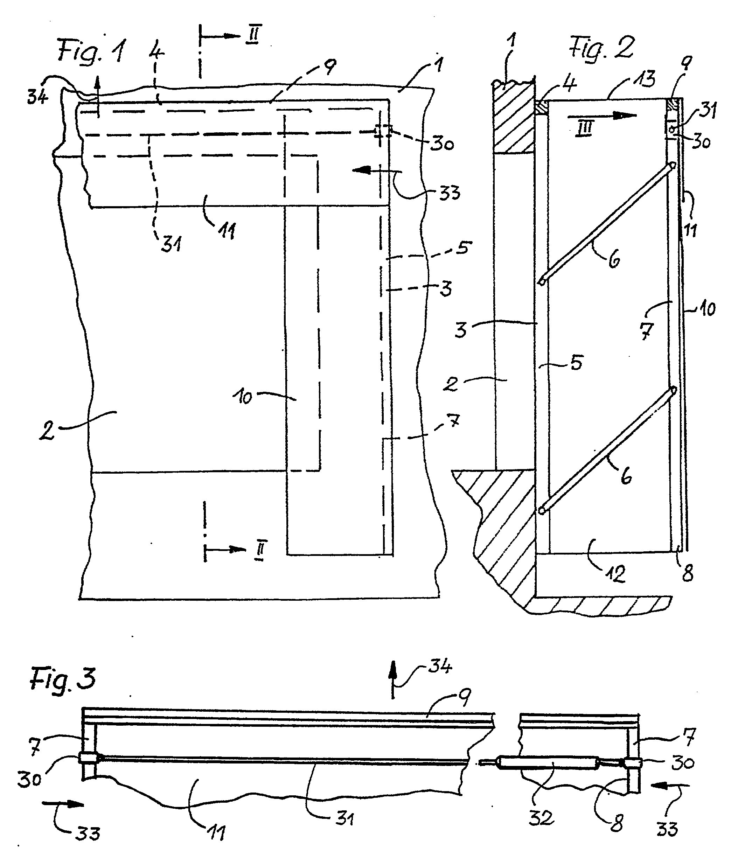

Fig. 1 eine Teilansicht der Dichtung am Rand einer Gebäudeöffnung,
Fig. 2 einen Schnitt nach der Linie II - II von Fig. 1 und
Fig. 3 eine Teilansicht der Dichtung gemäss Fig. 2 in Richtung des Pfeiles III gesehen.

Das Gebäude 1 hat eine Öffnung 2, an die Fahrzeuge mit dem Heck zum Be- und entladen herangefahren werden können. Dies Öffnung 2 ist von einem u-förmigen Rahmen 3 umschlossen, der fest mit dem Gebäude 1 verbunden ist und einen waagerechten, oberhalb der Öffnung 2 befindlichen Steg 4 und zu beiden Seiten der Öffnung 2 befindliche Schenkel 5 hat. An den Schenkeln 5 sind Lenker 6 angelenkt, die mit ihrem freien Ende mit den senkrechten Schenkeln 7 aus U-Eisen eines ebenfalls U-förmigen Rahmens 8 mit einem waagerechten Steg 9 verbunden sind. Die Rahmen 3 und 8 stimmen bezüglich ihrer Grösse überein; der Rahmen 8 kann sich aufgrund der Lenker 6, die längenveränderbar sein können, in Richtung auf das Gebäude 1 bewegen.

An dem Steg 9 und den beiden Schenkeln 7 ist eine biegsame, dauerhafte, folienartige Schürze befestigt, die sich an die Gestalt des Fahrzeuges anpassen kann. Diese Schürze besteht aus zwei senkrechten Streifen 1o und einem oberen, waagerecht verlaufenden Streifen 11. Die Streifen 1o sind dabei an den Enden des Steges 9 und an den Schenkeln 7 befestigt, während der Streifen 11 mit seinem oberen Rand mit dem Steg 9 in Verbindung steht, im übrigen aber frei herabhängt.

Die beiden Rahmen 3, 8 sind durch einen Bespannstoff verbunden. Die Seitenteile sind mit 12 bezeichnet; der obere, als Dach wirkende Abschnitt 13 verbindet die Stege 4 und 9 miteinander.

Am oberen Ende der Schenkel 7 etwa 5 - 8 cm unterhalb des Steges 9 sind die Schenkel 7 von einer Schelle 3o umschlossen, die zur Befestigung eines zugfesten Seiles 31 dienen, das sich parallel zum Steg 9 erstreckt und ein Spannschloss 32 aufweist, um die Seilspannung einstellen zu können. Da die Enden des Steges 9 mit den oberen Enden der Schenkel starr verbunden sind, wird durch Spannen des Seiles 31 in den Steg 9 ein Moment eingeleitet. Dies führt zu einer Durchwölbung des Steges nach oben hin in Richtung des Pfeiles 34, während gleichzeitig durch die Seilspannung in die Schenkel 7 Kräfte im Sinne der Pfeile 33 eingeleitet werden, die ein Ausweichen der Schenkel 7 zur Seite hin vermeiden.

Diese Einrichtung zur Durchbiegung des Steges 9 ist sehr einfach auszuführen, zumal auch Druckstäbe nicht vorhanden sind, die vomSeil 31 her auf den Steg 9 einwirken.

## Patentansprüche

1. Verformbare Dichtung des Spaltes zwischen dem Rand einer Gebäudeöffnung (2) und dem Heck eines an diese herangefahrenen Fahrzeuges mit einer Schürze, die seitlich und oben an einem im Abstand von dem Gebäude (1) angeordneten, unten offenen, U-förmigen Rahmen (8) befestigt ist, wobei die beiden seitlichen Schenkel (7) des Rahmens zur Halterung der seitlichen Schürzenabschnitte (10) und der waagerechte, oben liegende Steg (9) dieses Rahmens zur Halterung des oberen, sich quer erstreckenden Schürzenabschnittes (11) dienen, dadurch gekennzeichnet, dass ein verstellbares Zugglied (31) vorgesehen ist, das an seinen Enden mit den seitlichen Schenkeln (7) verbunden ist.

2. Dichtung nach Anspruch 1, dadurch gekennzeichnet, dass das Zugglied (31) parallel zu dem Steg (9) angeordnet ist.

3. Dichtung nach Anspruch 1, dadurch gekennzeichnet, dass die Enden des Zuggliedes (31) am oberen Ende der Schenkel (7) einige Zentimeter unterhalb des Steges (9) mit den Schenkeln verbunden sind.

## Claims

1. Deformable seal for sealing the gap between the edge of an opening (2) in a building and the rear of a vehicle which is reversed up to said opening, comprising a guard, which is secured at its lateral and upper ends to a U-shaped frame (8), which is spaced from the building (1), the lower end of said frame being open, the two side-pieces (7) of the frame serving to retain in position the lateral guard portions (10), and the horizontal cross-piece member (9) situated at the upper end of this frame serving to retain in position the upper, transversely extending guard portion (11), characterised in that an adjustable tensioning member (31) is provided, which is connected, at its ends, to the side-pieces (7).

2. Seal according to claim 1, characterised in that the tensioning member (31) is disposed parallel to the cross-piece member (9).

3. Seal according to claim 1, characterised in that the ends of the tensioning member (31) are connected to the side-pieces at the upper end of the side-pieces (7) a few centimetres beneath the cross-piece member (9).

## Revendications

1. Dispositif déformable pour rendre étanche l'intervalle compris entre le bord d'une baie (2) de bâtiment et l'arrière d'un véhicule automobile qui en est rapproché, comprenant une jupe qui est fixée latéralement et en haut, à un cadre (8) en forme de U ouvert vers le bas et disposé à distance du bâtiment (1), les deux jambages latéraux (7) du cadre servant à maintenir les parties latérales (10) de la jupe, et l'âme (9) horizontale et se trouvant vers le haut du cadre à maintenir, la partie supérieure (11) de la jupe s'étendant transversalement, caractérisé en ce qu'il est prévu un élément de traction (31) réglable dont les extrémités sont reliées aux jambages latéraux (7).

2. Dispositif d'étanchéité suivant la revendication 1, caractérisée en ce que l'élément de traction (31) est monté parallèlement à l'âme (9).

3. Dispositif d'étanchéité suivant la revendication 1, caractérisée en ce que les extrémités de l'élément de traction (31) sont reliées aux jambages (7), à l'extrémité supérieure de ceux-ci, à quelques centimètres en-dessous de l'âme (9).

Fig. 1

Fig. 2

Fig. 3